# EUROPEAN PATENT SPECIFICATION

(11) **EP 4 477 437 B1**
(45) Date of publication and mention of the grant of the patent: **25.11.2026**
(21) Application number: 24177561.8
(22) Date of filing: 23.05.2024
(51) Int. Cl.: B60K 6/387, B60K 6/40, B60K 6/405, H02K 5/04, H02K 7/00, H02K 11/00, H02K 11/33, B60K 6/48

(54) **POWERTRAIN STRUCTURE OF VEHICLE AND VEHICLE**
ANTRIEBSSTRANGSTRUKTUR EINES FAHRZEUGS UND FAHRZEUG
STRUCTURE DE GROUPE MOTOPROPULSEUR DE VÉHICULE ET VÉHICULE

(30) Priority: 16.06.2023 JP 2023099091
(43) Date of publication of application: 18.12.2024
(73) Proprietor: MAZDA MOTOR CORPORATION, Hiroshima 730-8670 (JP)
(72) Inventor: Shiba, Yoshihiro, Fuchu-cho, Aki-gun (JP); Kashihara, Hiroaki, Fuchu-cho, Aki-gun (JP); Ichikawa, Hiroto, Fuchu-cho, Aki-gun (JP); Okada, Masakazu, Fuchu-cho, Aki-gun (JP); Yamasaki, Noriharu, Fuchu-cho, Aki-gun (JP)
(74) Representative: Müller-Boré & Partner Patentanwälte PartG mbB

(56) References cited:
- WO-A1-2013/183500
- US-A- 6 166 498
- US-A1- 2017 100 998
- US-A1- 2022 324 315
- US-B2- 8 201 650

## Description

### TECHNICAL FIELD

The present invention relates to a powertrain structure of a vehicle, and also relates to a vehicle.

### BACKGROUND

Vehicles provided with an engine and a motor as a driving source for propelling the vehicle, and also provided with a battery which supplies electric power to the motor (so-called "hybrid vehicle") are known. Since such vehicles are necessary to convert direct current of the battery into alternating current in order to drive the motor, a power converter for performing the above-described conversion is additionally mounted on the vehicle.

For example, JP6349415B2 discloses a structure of a vehicle on which an engine, a motor, a battery, and a power converter are mounted, in which an upper surface of a case which accommodates the motor is fastened with a bottom surface of a power converter (a power control device in JP6349415B2), and the power converter is mounted above the case.

In the structure of JP6349415B2, the power converter occupies the entire space above the motor and the case. Therefore, when installing other devices above the motor and the case, the layout will become difficult. Thus, there is room for improvement in the degree of freedom in the layout.

WO 2013/183500 A1 describes that an inverter and a motor-generator are disposed in a front compartment of a vehicle and connected to each other via a motor-side high-voltage harness. In this high-voltage-harness connection structure for an FF plug-in hybrid vehicle, a plug connector provided on the inverter-side end of the aforementioned motor-side high-voltage harness is connected to a position on the back surface of the inverter. The motor-side high-voltage harness is coupled to the periphery of the plug connector, and an air cleaner that is less rigid than the plug connector is disposed, towards the rear of the vehicle, so as to face the back surface of the plug connector.

US 2022/324315 A1 discloses a powertrain structure comprising an engine and a motor, wherein alternating current is supplied to the motor via busbars.

### SUMMARY

The present invention is made in view of the above situations, and one purpose thereof is to provide a powertrain structure of a vehicle, capable of increasing the degree of freedom in the layout.

The above-described purpose is achieved by a powertrain structure of a vehicle according to the present invention as defined in claim 1. Particularly, the powertrain structure includes an engine serving as a driving source configured to propel the vehicle, the engine including an engine body where a combustion chamber is formed; a motor serving as a driving source configured to propel the vehicle; a battery configured to supply electric power to the motor; a power converter configured to convert direct current of the battery into alternating current and supply the alternating current to the motor; a housing disposed on one side of the engine body in a horizontal first direction and configured to accommodate the motor therein; and a communication device configured to communicate with the power converter, the power converter including: a smoothing capacitor configured to smooth the direct current inputted from the battery; a power module disposed on one side of the smoothing capacitor in a horizontal second direction perpendicular to the first direction, and configured to convert the direct current smoothed by the smoothing capacitor into alternating current; and a connector for communication provided to an upper surface of the power converter and electrically connected with the communication device, wherein a protrusion is disposed above the housing, the protrusion protruding from a side surface of the engine body on the one side in the first direction to the one side, wherein the power converter is partially located between the housing and the protrusion, and is disposed above the housing in a state where the connector for communication does not overlap with the protrusion in a plan view, wherein the power converter includes an AC busbar coupled to the motor and configured to transmit the alternating current generated by the power module to the motor, and wherein the housing is provided with a busbar insert part into which the AC busbar is inserted in the first direction.

In the present invention, the smoothing capacitor and the power module are lined up in the horizontal second direction. Therefore, dimensions of the spaces in the up-and-down direction occupied by the two components (that is, dimensions of the power converter in the up-and-down direction and the first direction) can be reduced. Further, the power converter is partially located between the housing and the protrusion which is disposed above the housing and protrudes from the side surface of the engine body on the one side in the first direction to the one side. Therefore, both the protrusion and the power converter can be disposed above the housing compactly, thereby increasing the freedom in the layout.

In addition, the connector for communication is provided to the upper surface of the power converter, and the connector for communication is disposed so that it does not overlap with the protrusion in the plan view. Therefore, it can be suppressed that a colliding object around the powertrain collides with the connector for communication in a front collision, a rear collision, or a side collision of the vehicle, while facilitating access to the connector for communication from above to improve efficiency of coupling a harness, etc. thereto.

The communication device may be configured to transmit a signal for controlling the power module, and the power module may be disposed below the connector for communication.

According to this configuration, by disposing the power module near the connector for communication, a dimension of a member for coupling them can be reduced.

In the present invention, the power converter includes an AC busbar coupled to the motor and configured to transmit the alternating current generated by the power module to the motor. The housing is provided with a busbar insert part into which the AC busbar is inserted in the first direction.

According to the present invention, when assembling the powertrain, by moving the power converter in the first direction, the AC busbar can be inserted into the busbar insert part to couple the power converter to the motor. Thus, a work space to be secured around the power converter in order to insert the AC busbar into the busbar insert part can be reduced in the up-and-down direction. Therefore, according to this configuration, the gap size between the protrusion and the housing in the up-and-down direction can be reduced, and the volume of the protrusion and the power converter can be secured, while enabling the insertion of the AC busbar into the busbar insert part.

The power converter may have a case configured to accommodate the smoothing capacitor and the power module and having an upper surface on which the connector for communication is provided. The case may include a busbar holding part provided to an end thereof in the second direction and configured to hold the AC busbar, and a bulged part bulging toward the other side of the busbar holding part in the first direction.

According to this configuration, by disposing at least the bulged part below the protrusion, the power converter can be disposed compactly on the side of the engine body and above the housing.

The power converter may include a control circuit board electrically connected with the connector for communication and the power module, and configured to control the power module. The control circuit board may be disposed above the power module in a state where the control circuit board extends to the other side from the power module in the first direction in the plan view.

According to this configuration, by disposing the control circuit board near the power module, a member for coupling them can be reduced in the size, and a space below the protrusion can be utilized as the installation space of the control circuit board.

### BRIEF DESCRIPTION OF DRAWINGS

Fig. 1 is a system chart illustrating an outline configuration of a vehicle according to one embodiment of the present invention.
Fig. 2 is an outline perspective view of a powertrain module.
Fig. 3 is an outline view of the powertrain module, when seen from the front.
Fig. 4 is an outline view of the powertrain module, when seen from the rear.
Fig. 5 is an outline view of the powertrain module, when seen from the left.
Fig. 6 is an outline top view of the powertrain module.
Fig. 7 is a view of a state where an engine and a power converter are removed from the state illustrated in Fig. 5.
Fig. 8 is an outline top view illustrating the periphery of the power converter in a state where an upper lid is removed.
Fig. 9 is an outline cross-sectional view illustrating an internal structure of the power converter.
Fig. 10 is an outline perspective view illustrating a peripheral structure of an alternating current (AC) busbar and a busbar insert part.
Fig. 11 is an outline perspective view illustrating the AC busbar disassembled.

### DETAILED DESCRIPTION OF THE INVENTION

### (Entire Configuration)

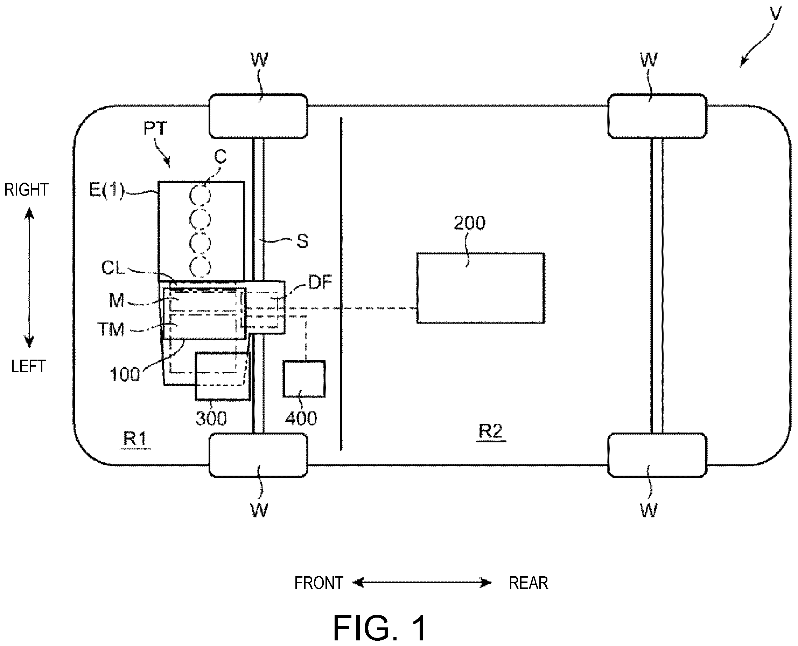

Fig. 1 is a system chart illustrating an outline configuration of a vehicle V to which a powertrain structure according to one embodiment of the present invention is applied. Below, a front-and-rear direction of the vehicle V is simply referred to as the "front-and-rear direction." Further, a width direction of the vehicle V, which is a left-and-right direction when a viewer faces the front is referred to as the "left-and-right direction." Note that in each drawing, front, rear, left, and right correspond to the above-described directions. In this embodiment, the left-and-right direction is an example of a "first direction" in the present invention, and the left side is an example of "one side in the first direction" in the present invention. Further, the front-and-rear direction is an example of a "second direction" in the present invention, and the front side is an example of "one side in the second direction" in the present invention.

A powertrain module PT, a power converter 100, and a high-voltage battery 200 are mounted on the vehicle V. Optionally, a low-voltage battery 300 is mounted on the vehicle V.

The vehicle V may be a so-called "hybrid vehicle," which carries an engine E and a motor M which function as driving sources for propelling the vehicle V (wheels W). The powertrain module PT includes the engine E (in detail, an engine body 1 which will be described later), and the motor M. The powertrain module PT may include a clutch CL, a transmission TM, and a differential gear DF, in addition to the engine E and the motor M.

The motor M includes an output shaft, a rotor having permanent magnets provided around the output shaft, and a stator comprised of a plurality of coils disposed around the outer circumference of the rotor. The output shaft (rotor) may be rotated by supplying alternating current with different phases to the plurality of coils of the stator. In this embodiment, the motor M is an alternating current (AC) synchronous motor, particularly a three-phase alternating current (AC) synchronous motor, which has a U-phase coil, a V-phase coil, and a W-phase coil. Current with different phases are supplied to the coils.

The clutch CL may disconnectably connect the motor M with the engine E. The transmission TM may be connected with the motor M, and may reduce the speed of rotation (changes the gear stage) inputted from the motor M and output the reduced rotation. The differential gear DF transmits the rotation outputted from the transmission TM to the wheels W via drive shafts S.

The vehicle V may be a parallel-type hybrid vehicle, which is capable of traveling only by a driving force of the motor M, traveling by a driving force of both the motor M and the engine E, and traveling only by a driving force of the engine E. In detail, when the clutch CL is disconnected, only the driving force of the motor M is given to the wheels W. On the other hand, when the clutch CL is connected and the motor M does not generate the driving force, only the driving force of the engine E is given to the wheels W. Further, when the clutch CL is connected and the motor M generates the driving force, the driving forces of the engine E and the motor M are given to the wheels W.

The vehicle V may be a vehicle capable of performing regenerative deceleration so that the motor M generates electric power by a rotational force transmitted from the wheels W when the vehicle V decelerates.

The high-voltage battery 200 is a battery which supplies and receives electric power to/from the motor M. When the motor M drives as the driving source for propelling the vehicle, the high-voltage battery 200 supplies the electric power to the motor M. On the other hand, when the motor M drives as a generator, the high-voltage battery 200 stores electric power generated by the motor M.

The power converter 100 converts direct current (DC) of the high-voltage battery 200 into alternating current (AC), and supplies it to the motor M. In detail, the power converter 100 may convert direct current into three-phase alternating current. Further, when the motor M drives as the generator, the power converter 100 may convert the alternating current generated by the motor M into direct current, and supplies it to the high-voltage battery 200.

The low-voltage battery 300 may be a battery which supplies electric power to electrical components provided to various parts of the vehicle V. The low-voltage battery 300 may be a battery of which a nominal voltage (output voltage) is smaller than the high-voltage battery 200. For example, the high-voltage battery 200 may be a lithium-ion battery or a nickel-hydrogen battery with the nominal voltage of 24V (or about 24V) or higher, and the low-voltage battery 300 may be a lead battery or a lithium-ion battery with the nominal voltage of 12V (or about 12V) or 24V (or about 24V).

In this embodiment, the powertrain module PT, the power converter 100, and the low-voltage battery 300 are accommodated in a powertrain room (or compartment) R1 defined in a front part of the vehicle V. The high-voltage battery 200 is accommodated in a lower part of a cabin R2 defined behind the powertrain room R1.

### (Engine)

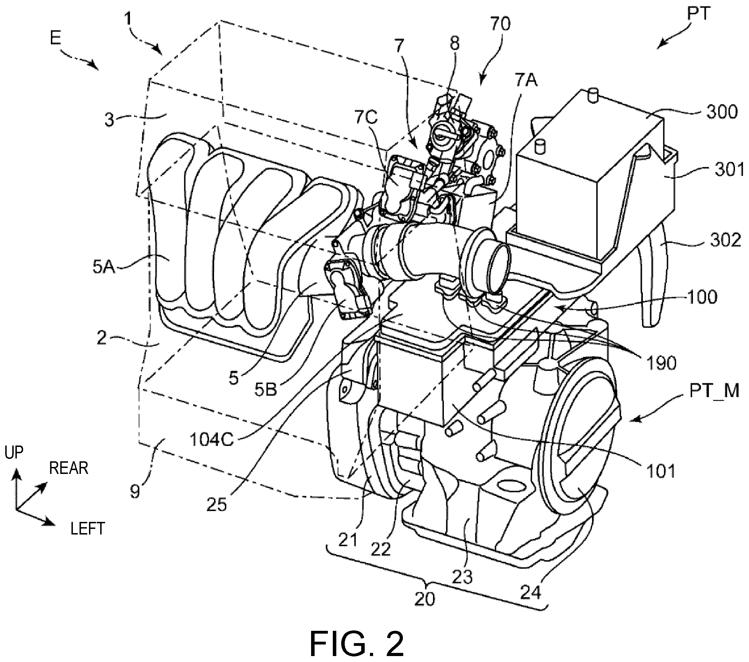

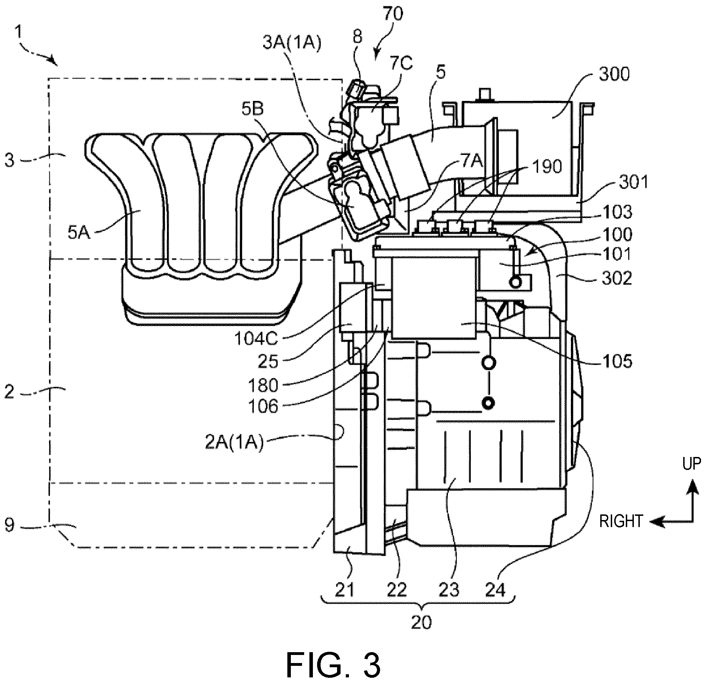

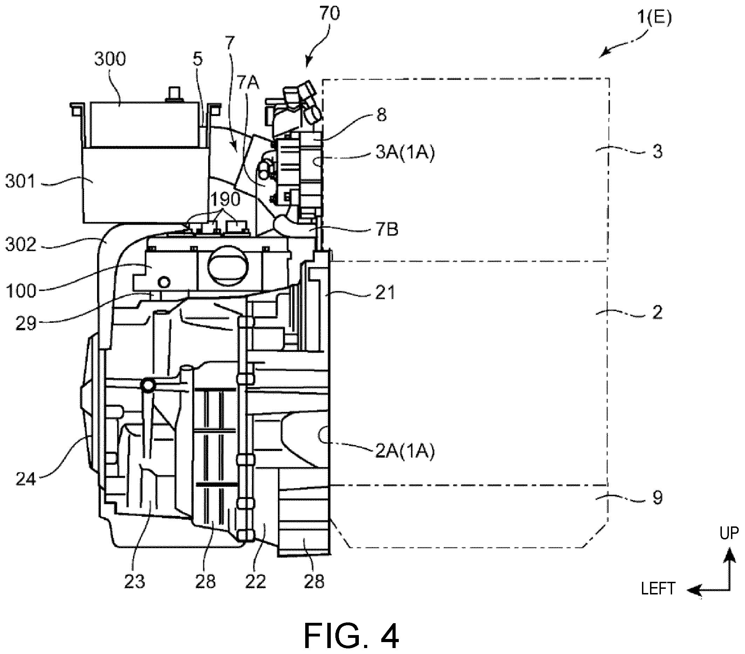

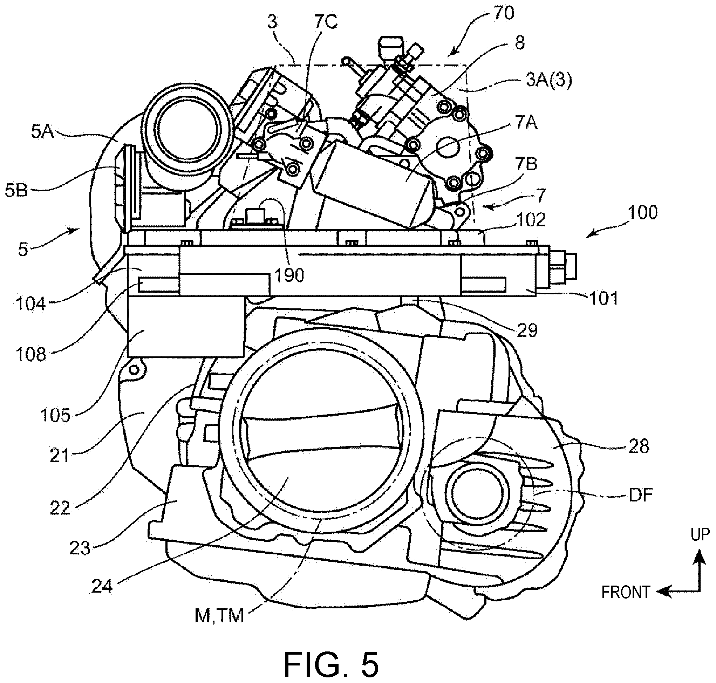

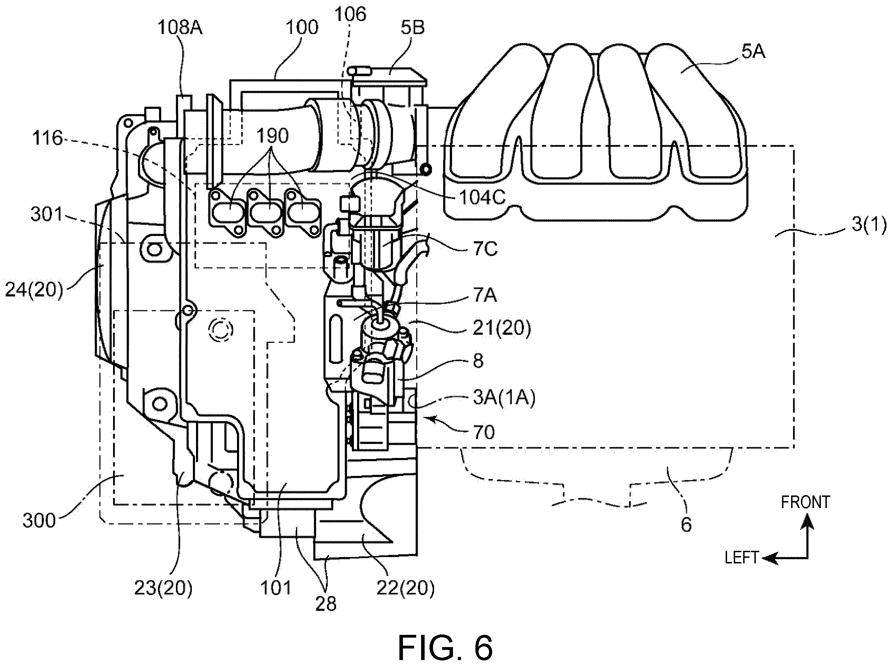

Fig. 2 is an outline perspective view of the powertrain module PT and its periphery. Figs. 3 to 5 are outline views of the powertrain module PT and its periphery. Fig. 3 is a view of the powertrain module PT when seen from the front, Fig. 4 is a view of the powertrain module PT when seen from the rear, and Fig. 5 is a view of the powertrain module PT when seen from the left. Fig. 6 is an outline top view of the powertrain module PT and its periphery. Note that, in Fig. 5, illustration of the low-voltage battery 300 is omitted. Further, in Fig. 6, the low-voltage battery 300 is illustrated by a one-dot chain line.

The engine E is provided with the engine body 1 where one ore more combustion chambers C are formed. The engine body 1 is a reciprocating internal combustion engine, which includes a cylinder block 2 where one or more cylinders (not illustrated) are formed, a cylinder head 3 which covers the cylinder block 2 from above, one or more pistons (not illustrated) which is inserted in the cylinder(s) so as to be reciprocatable in the up-and-down direction, and a crankshaft (not illustrated) which rotates in association with the reciprocating motion of the piston.

The engine E is also provided with an oil pan 9 which is coupled to a lower surface of the cylinder block 2 and stores lubricant. Note that the combustion chamber C is a space defined by an inner circumferential surface of the cylinder, a crown surface of the piston, and a bottom surface of the cylinder head 3. In this embodiment, the engine body 1 may be an in-series four-cylinder engine, and may be provided with four cylinders and four combustion chambers C which are lined up along a rotation axis of the crankshaft.

The engine E may also include an intake passage 5 where intake air (air) introduced into the engine body 1 circulates, and an exhaust passage 6 where exhaust gas (burnt gas) drawn from the engine body 1 circulates. Note that the exhaust passage 6 is partially illustrated by a one-dot chain line only in Fig. 6.

As described above, in this embodiment, the engine body 1 particularly has the four combustion chambers C. Corresponding to this, the intake passage 5 may be provided with an intake manifold 5A having four passages which introduce intake air into the respective combustion chambers C. The intake manifold 5A is coupled to the cylinder head 3. Further, a throttle valve unit 5B including a throttle valve which opens and closes the intake passage 5, and an actuator which drives the throttle valve is provided to the intake passage 5 upstream of the intake manifold 5A.

The engine E may be disposed in the powertrain room R1 in a posture in which the crankshaft extends in the left-and-right direction, and the combustion chambers C (cylinders) are lined up in the left-and-right direction. That is, the engine E is transversely disposed in the vehicle V. Further, the engine E may be disposed in the powertrain room R1 in a posture in which the intake manifold 5A is located forward of the engine body 1.

One or more peripheral (or auxiliary) equipment, particularly various kinds of peripheral (or auxiliary) equipment provided to the engine E are disposed on the left side of an upper part of the engine body 1. In this embodiment, at least one of or all of an exhaust gas recirculation (EGR) cooler 7A, an EGR cooler connecting part 7B, an EGR valve unit 7C, and a fuel pump 8 are disposed on the left side of the cylinder head 3.

Particularly, as one of the peripheral equipment, the engine E has an EGR system 7 which recirculates to the intake passage 5 a part of exhaust gas which circulates the exhaust passage 6 including an EGR passage which communicates the exhaust passage 6 with the intake passage 5 (EGR gas). The EGR system 7 has the EGR cooler 7A which is provided at an intermediate location of the EGR passage and cools the EGR gas. Further, the EGR system 7 has the EGR valve unit 7C including an EGR valve which opens and closes the EGR passage, and an actuator which drives the EGR valve. The EGR cooler 7A has a substantially rectangular parallelepiped shape extending in the flow direction of the EGR gas. The EGR cooler 7A is disposed on the left side of the cylinder head 3 in a posture in which it extends in the front-and-rear direction, and its upstream end is located on the rear side and its downstream end is located on the front side. The EGR valve unit 7C is attached to a front end of the EGR cooler 7A, is disposed on the left side near a front end part of the cylinder head 3, and is connected to the intake passage 5. A part of the EGR passage is formed inside the cylinder head 3, and inside of the cylinder head 3, the EGR passage communicates with the exhaust passage 6. The EGR passage formed inside the cylinder head 3 opens in a rear part of a left side surface 3A of the cylinder head 3. The EGR system 7 has the EGR cooler connecting part 7B which couples the opening of the EGR passage formed in the left side surface 3A of the cylinder head 3 to an upstream end of the EGR cooler 7A. The EGR cooler connecting part 7B is disposed on the left side of the rear part of the cylinder head 3.

Further, the engine E may have a fuel supply which supplies fuel to the combustion chamber C, and the fuel pump 8 which pumps the fuel to the fuel supply as one of the peripheral equipment. The fuel pump 8 is disposed on the left side of the cylinder head 3 and above the EGR cooler 7A and the EGR cooler connecting part 7B.

The position in the left-and-right direction of the left side surface 3A of the cylinder head 3 may be substantially the same as the position in the left-and-right direction of a left side surface 2A of the cylinder block 2. Thus, the EGR cooler 7A, the EGR cooler connecting part 7B, the EGR valve unit 7C, and the fuel pump 8 which are disposed on the left side of the cylinder head 3 are located on the left side of a left side surface 1A of the engine body 1 comprised of the left side surface 2A of the cylinder block 2 and the left side surface 3A of the cylinder head 3. That is, these apparatuses 7A, 7B, 7C, and 8 are disposed above a housing 20 (described later) so as to protrude to the left side from the left side surface 1A of the engine body 1. Below, the EGR cooler 7A, the EGR cooler connecting part 7B, the EGR valve unit 7C, and the fuel pump 8 are suitably referred to as a "specific apparatus 70." The specific apparatus 70 is an example of a "protrusion" in the present invention.

### (Motor-side Powertrain Module)

A powertrain module PT_M on the motor M side which is a part of the powertrain module PT excluding the engine E (engine body 1) is disposed on the left side of the engine body 1.

In detail, the housing 20 where a space is defined inside may be fastened to the left side surface 2A of the cylinder block 2, and the clutch CL, the motor M, the transmission TM, and the differential gear DF are accommodated in the housing 20. Inside the housing 20, the clutch CL, the motor M, and the transmission TM may be lined up in this order from the right side. Inside the housing 20, the differential gear DF is disposed rearward of the motor M and the transmission TM.

In this embodiment, the housing 20 may be comprised of a plurality of members. Particularly, the housing 20 has a front cover 21 fastened to the left side surface 2A of the cylinder block 2, a motor housing 22 fastened to a left side surface of the front cover 21, an axle housing 23 fastened to a left side surface of the motor housing 22, and an axle housing cover 24 fastened to a left side surface of the axle housing 23.

Each of the motor housing 22 and the axle housing 23 may have a substantially cylindrical shape of which the center axis extends in the left-and-right direction, and an outer circumferential surface of an upper part of each of the motor housing 22 and the axle housing 23 may curve so as to bulge upwardly, when seen in the left-and-right direction. The axle housing cover 24 is a substantially disk-shaped member, and it is fastened to the axle housing 23 so as to cover the opening on the left side of the axle housing 23.

The clutch CL and the motor M are mainly disposed inside the front cover 21 and the motor housing 22. The motor M is supported by the front cover 21 so that its output shaft extends in the left-and-right direction, and is rotatable on this axis. The transmission TM is mainly disposed inside the axle housing 23.

The differential gear DF may be mainly disposed in a rear part of the axle housing 23. In detail, the motor housing 22 and the axle housing 23 may have a part which bulges rearwardly, and the differential gear DF is accommodated inside both the bulged parts. That is, the housing 20 may have a differential case 28 which is comprised of a rear part of the motor housing 22 and the axle housing 23 as an accommodating part of the differential gear DF.

The front cover 21, the motor housing 22, and the axle housing 23 may be lined up in the left-and-right direction so that their center axes extend along the substantially same line. Outer diameters of the motor housing 22 and the axle housing 23 are set as the substantially same size, and outer circumferential surfaces of the two housings 22 and 23 continue in the left-and-right direction in general. On the other hand, the maximum length of the front cover 21 in the up-and-down direction may be larger than the maximum lengths of the motor housing 22 and the axle housing 23 in the up-and-down direction, and the front cover 21 may extend in the up-and-down direction up to a position above upper edges of the motor housing 22 and the axle housing 23. Further, the front cover 21 may extend in the front-and-rear direction up to a position forward of front edges of the motor housing 22 and the axle housing 23. That is, a front end of the front cover 21 is located forward of front ends of the motor housing 22 and the axle housing 23. Further, the front cover 21 is fastened to the engine body 1 so that its front end position is located forward of a front end position of the engine body 1.

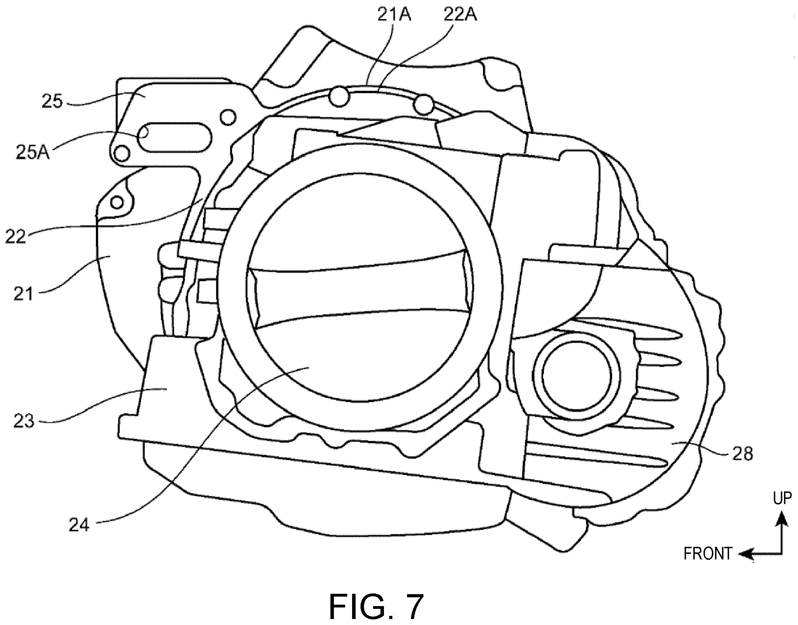

Fig. 7 is a view illustrating a state where the engine E and the power converter 100 are removed from the state illustrated in Fig. 5. As illustrated in Fig. 7, a busbar insert part 25 into which an AC busbar 115 (described later) of the power converter 100 is inserted may be provided to the front end parts of the front cover 21 and the motor housing 22.

The busbar insert part 25 may be provided to an upper part of the front end part of the front cover 21 and the upper part of the motor housing 22 which opposes thereto. Particularly, the motor housing 22 has a motor housing body part 22A surrounding the motor M. The front cover 21 includes a motor housing coupling part 21A having substantially the same outer diameter as the motor housing body part 22A, and the motor housing body part 22A is coupled to the motor housing coupling part 21A. A left part of the busbar insert part 25 is provided to the motor housing 22, and it protrudes forward from a position slightly offset forward and downward from an upper end part of the outer circumferential surface of the motor housing body part 22A. A right part of the busbar insert part 25 is provided to the front cover 21, and it protrudes forward from a position slightly offset forward and downward from an upper end of the outer circumferential surface of the motor housing coupling part 21A. The busbar insert part 25 has a substantially rectangular parallelepiped shape extending in the front-and-rear direction. An opening 25A which opens to the left is formed on the left side surface of the busbar insert part 25.

Here, as described above, the busbar insert part 25 may have a shape which protrudes forward from the motor case body part 22A and the motor housing coupling part 21A. Note that a part of the front cover 21 located on the right side of the motor housing coupling part 21A extends up to a position forward of the busbar insert part 25. Thus, the front end of the busbar insert part 25 is located rearward of the front end of the front cover 21.

### (Power Converter)

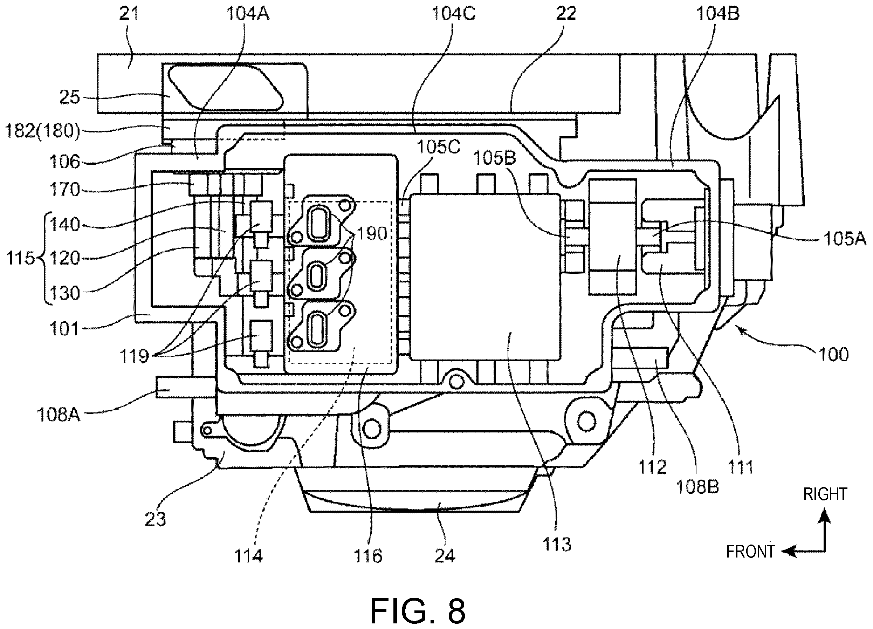

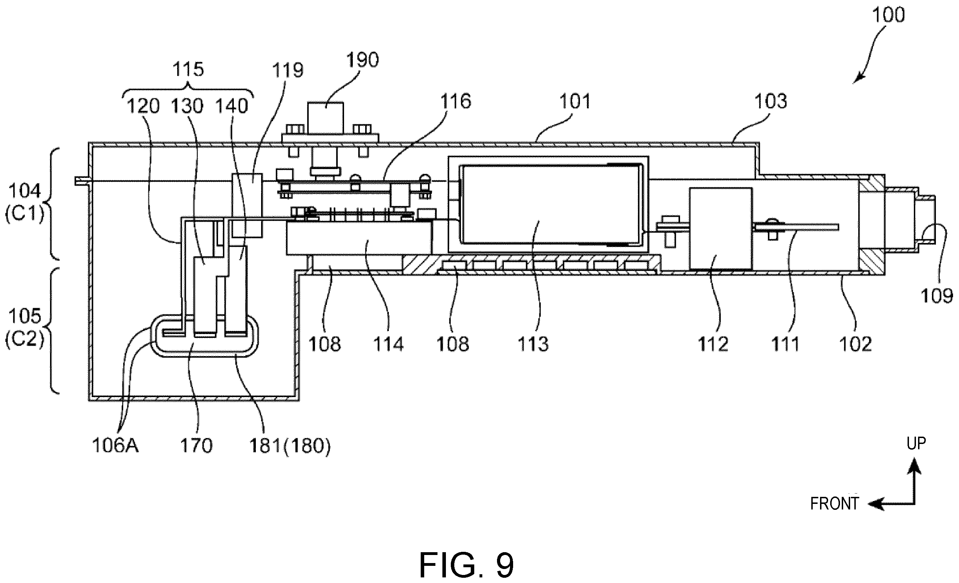

Fig. 8 is an outline top view illustrating the periphery of the power converter 100. In Fig. 8, the power converter 100 in a state where an upper lid 103 (described later) is removed from a case 101 (described later) is illustrated. Fig. 9 is an outline cross-sectional view illustrating an internal structure of the power converter 100.

The power converter 100 includes a filter 112, a smoothing capacitor 113, a power module 114, a control circuit board 116, and the case 101 which accommodates these components inside. Further, the power converter 100 is provided with a plurality of busbars. The busbar is a component formed by a metal plate. The power converter 100 includes a DC busbar 111 which is a busbar coupled to the high-voltage battery 200, and the AC busbar 115 coupled to the motor M. Further, the power converter 100 may have a current sensor 119 for detecting current that flows through the AC busbar 115.

The DC busbar 111 receives direct current from the high-voltage battery 200. When the motor M drives as a generator, the DC busbar 111 sends out direct current toward the high-voltage battery 200. The filter 112 may be an electromagnetic compatibility (EMC) countermeasure component, which removes noise. The filter 112 is electrically connected with the DC busbar 111. Here, the electrical connection includes a connection through electromagnetic induction or capacitive coupling. In this embodiment, a ferrite core which has a cylindrical shape, and is connected in the electromagnetic induction fashion with the DC busbar 111, without directly contacting the DC busbar, is used as the filter 112. Note that a coil, a ferrite bead, a transformer for EMC countermeasure, an X capacitor, and a Y capacitor may be used as the filter 112. The smoothing capacitor 113 is a capacitor for smoothing the direct current. The smoothing capacitor 113 is electrically connected with the filter 112. The power module 114 is a main component for converting the direct current into alternating current. The power module 114 may be comprised of a semiconductor device. In detail, the power module 114 may include parts corresponding to U, V, and W phases, and each phase is constituted by a combination of a plurality of ICs (integrated circuits) including power semiconductors, such as an IGBT (Insulated Gate Bipolar Transistor), and a MOSFET (Metal Oxide Semiconductor Filed Effect Transistor). The power module 114 is electrically connected to the smoothing capacitor 113.

The AC busbar 115 is electrically connected with the power module 114. The AC busbar 115 transmits alternating current generated by the power module 114 to the motor M. Further, when the motor M drives as a generator, the AC busbar 115 receives the alternating current from the motor M, and transmits it to the power module 114. The AC busbar 115 may include a U-phase AC busbar 120 connected to the part corresponding to the U-phase of the power module 114, a V-phase AC busbar 130 connected to the part corresponding to the V-phase of the power module 114, and a W-phase AC busbar 140 connected to the part corresponding to the W-phase of the power module 114.

The direct current outputted from the high-voltage battery 200 may be inputted into the filter 112 via the DC busbar 111 to remove noise. The direct current after the noise removal may be inputted into the smoothing capacitor 113 to be smoothed by the smoothing capacitor 113. Then, the smoothed direct current is converted into three-phase alternating current by the power module 114, and it is supplied to the motor M via the AC busbar 115. Further, when the motor M drives as a generator, the alternating current generated by the motor M is inputted into the power module 114 via the AC busbar 115 to be converted into direct current by the power module 114. Then, after the generated direct current passes through the smoothing capacitor 113 and the filter 112, it is charged in the high-voltage battery 200 via the DC busbar 111.

The control circuit board 116 may control the power module 114. Particularly, the control circuit board 116 controls each IC of the power module 114 to change a conversion amount between direct current and alternating current.

A powertrain control module (PCM) 400 which may be a controller for totally controlling the components of the vehicle V including the motor M and the engine E is mounted on the vehicle V. The control circuit board 116 is electrically connected with the PCM 400 and the power module 114, and transmits a control signal to each IC of the power module 114 based on a command signal from the PCM 400. That is, the PCM 400 communicates with the control circuit board 116 (as well as the power converter 100) and transmits a signal for controlling the power module 114 to the control circuit board 116.

Further, the PCM 400 may also receive a signal from the current sensor 119 (described later) via the control circuit board 116. Note that the PCM 400 may be a device mainly comprised of a microcomputer including a processor (i.e., a central processing unit (CPU)) which performs calculations, memory(i.e., ROM and RAM), and various kinds of input/output buses. The PCM 400 is an example of a "communication device" in the present invention.

The case 101 (as well as the power converter 100) is disposed on the left side of the engine body 1, and above the housing 20. The case 101 may be supported by the housing 20 via a support member 29.

In this embodiment, the low-voltage battery 300 may be disposed above the case 101 (as well as the power converter 100) and on the left side of the engine body 1. Particularly, the low-voltage battery 300 is disposed at a position where its right part overlaps with a rear part and a left part of the case 101 in the plan view (when seen from above). Further, the low-voltage battery 300 is disposed at a position where it entirely overlaps with the engine body 1, when seen in the left-and-right direction.

Note that the low-voltage battery 300 may be held at the above-described position via a battery support member 301 which supports the low-voltage battery 300 from below, and a battery bracket 302 fixed to the vehicle body.

The case 101 may be a box-shaped member extending in a given direction. The case 101 may be disposed on the left side of the engine body 1 in a posture in which the appeared shape in the plan view becomes a substantially rectangle extending in the front-and-rear direction.

The case 101 may have a first accommodating part 104 which constitutes its upper part, and a second accommodating part 105 which protrudes downwardly from a front end part of the first accommodating part 104. The first accommodating part 104 defines a first space C1 of a substantially rectangular parallelepiped shape extending in the front-and-rear direction, and the second accommodating part 105 defines a second space C2 of a substantially rectangular parallelepiped shape which communicates with a front end part of the first space C1 and extends in the up-and-down direction.

The case 101 may have a case body 102 made of metal, which opens upwardly, and the upper lid 103 fixed to the opening part in the upper surface of the case body 102. The first accommodating part 104 is constituted by the upper part of the case body 102 and the upper lid 103, and the second accommodating part 105 is constituted by the case body 102.

The case 101 is disposed above the motor housing 22 and the axle housing 23 in the housing 20. The case 101 may be disposed above the motor housing 22 and the axle housing 23 so that the position of the second accommodating part 105 is offset forward from the positions of the upper end parts of the outer circumferential surfaces of the motor housing 22 and the axle housing 23. That is, as described above, the outer circumferential surfaces of the upper parts of the motor housing 22 and the axle housing 23 are curved so as to bulge upwardly, and the second accommodating part 105 is disposed at a position offset forward from the top part of the curved outer circumferential surfaces of the upper parts of the motor housing 22 and the axle housing 23.

The case 101 may be disposed so that the bottom surface of the first accommodating part 104 extends in the front-and-rear direction and passes through a position slightly above the upper end parts of the motor housing 22 and the axle housing 23. Thus, the clearances in the up-and-down direction between the bottom surface of the first accommodating part 104 and the upper end parts of the motor housing 22 and the axle housing 23 are minimized. Further, such clearances are reduced to the dimension smaller enough than the length of the second accommodating part 105 in the up-and-down direction. Thus, the second accommodating part 105 is located forward of the outer circumferential surfaces of the motor housing 22 and the axle housing 23, and extends in the up-and-down direction from a position slightly above the upper end parts of the motor housing 22 and the axle housing 23 to a position below the upper end parts.

The case 101 may be disposed in the front-and-rear direction so that its center in the front-and-rear direction becomes substantially the same as the positions of the upper end parts of the motor housing 22 and the axle housing 23. Further, the case 101 may extend rearwardly from a position forward of the front ends of the motor housing 22 and the axle housing 23. Note that the case 101 is disposed rearward of the front end of the front cover 21, and the front end position of the case 101 is located rearward of the front end of the front cover 21 (i.e., the front end position of the housing 20).

The case 101 is disposed in the up-and-down direction at a position below the specific apparatus 70. That is, the specific apparatus 70 may be disposed in the up-and-down direction at a position separated upwardly from the motor housing 22 and the axle housing 23, and the case 101 is disposed in the up-and-down direction between the motor housing 22 and the axle housing 23, and the specific apparatus 70.

Further, the case 101 is disposed at a position where a part thereof overlaps with the specific apparatus 70 is the plan view. Particularly, the case 101 has a shape which protrudes in the left-and-right direction at the center in the front-and-rear direction. That is, the case 101 includes a front accommodating part 104A which constitutes a front end part when dividing the case 101 based on the shape seen from above, a rear accommodating part 104B which constitutes a rear end part, and a center accommodating part 104C located between the front accommodating part 104A and the rear accommodating part 104B. The center accommodating part 104C has a dimension in the left-and-right direction larger than the front accommodating part 104A and the rear accommodating part 104B, and has a shape which bulges outwardly in the left-and-right direction from the front accommodating part 104A and the rear accommodating part 104B. A right end part of the center accommodating part 104C in the case 101 is disposed between the motor housing 22 and the axle housing 23, and the specific apparatus 70, and this right end part of the center accommodating part 104C overlaps with the specific apparatus 70 in the plan view. Note that the second accommodating part 105 is comprised of a lower part of the front accommodating part 104A, and a lower part of the front part of the center accommodating part 104C. The above-described center accommodating part 104C is an example of a "bulged part" in the present invention.

One or more, particularly three connectors 190 for communication which protrude upwardly are provided to the upper surface of the case 101. The three connectors 190 for communication are lined up in the left-and-right direction. The connectors 190 for communication is a part to which a wire harness extending from the PCM 400 is connected, and is electrically connected with the PCM 400 via the wire harness.

The connector 190 for communication is electrically connected with the control circuit board 116 inside the case 101, and by coupling the wire harness to the connector 190 for communication, the control circuit board 116 is electrically connected with the PCM 400 via the connector 190 for communication and the wire harness.

Further, a cooling structure for cooling the power module 114 is provided to the case 101. Particularly, a cooling channel 108 for circulating coolant is formed in a lower part of the case 101. Further, coolant entrance parts 108A and 108B which communicate with the cooling channel 108 to introduce and discharge the coolant into/from the cooling channel 108 are provided to the lower part of the case 101.

The DC busbar 111 may have a plate shape, and may be disposed at a rear end of the first accommodating part 104 in a posture extending substantially horizontally. A through-hole 109 which communicates the inside of the case 101 with the outside may be formed in a rear end part of the case body 102. By coupling the busbar (not illustrated) electrically connected to the high-voltage battery 200 to the DC busbar 111 through the through-hole 109, the DC busbar 111 (as well as the power converter 100) is electrically connected with the high-voltage battery 200.

The filter 112 may have a substantially rectangular parallelepiped outside shape. The filter 112 is disposed forward of the DC busbar 111 in a posture extending in the left-and-right direction. The filter 112 and the DC busbar 111 are connected to each other via a first coupling busbar 105A disposed therebetween.

The smoothing capacitor 113 may have a substantially rectangular parallelepiped outside shape. The smoothing capacitor 113 may have a substantially square shape in the plan view. That is, the smoothing capacitor 113 has substantially-square upper and bottom surfaces. The smoothing capacitor 113 is disposed forward of the filter 112 in a posture in which two sides of its upper surface (and bottom surface) become substantially parallel with each other in the front-and-rear direction. The filter 112 and the smoothing capacitor 113 are connected to each other via a second coupling busbar 105B disposed therebetween.

The power module 114 may have a substantially rectangular parallelepiped outside shape as a whole. The power module is disposed forward of the filter 112 in a posture extending in the left-and-right direction as a whole. The smoothing capacitor 113 and the power module 114 may be connected to each other by a third coupling busbar 105C disposed therebetween. The power module 114 is disposed forward of the filter 112 in a posture in which its part corresponding to the U-phase, the part corresponding to the V-phase, and the part corresponding to the W-phase are lined up in the left-and-right direction.

The DC busbar 111, the filter 112, and the smoothing capacitor 113 are accommodated inside the first accommodating part 104. As described above, the DC busbar 111, the filter 112, and the smoothing capacitor 113 may be lined up in this order from the rear to the front inside the first accommodating part 104. Further, when the case 101 is divided into the front accommodating part 104A, the rear accommodating part 104B, and the center accommodating part 104C, the DC busbar 111 and the filter 112 may be accommodated inside the rear accommodating part 104B, and the smoothing capacitor 113 and the power module 114 may bee accommodated inside the center accommodating part 104C.

The control circuit board 116 may be a substantially plate shape member, and has a substantially rectangular outside shape. The control circuit board 116 is accommodated inside the first accommodating part 104 in a posture extending substantially horizontally and extending in the left-and-right direction. Further, when the case 101 is divided into the front accommodating part 104A, the center accommodating part 104C, and the rear accommodating part 104B, the control circuit board 116 is accommodated inside the center accommodating part 104C.

The control circuit board 116 may be disposed above the power module 114. The control circuit board 116 may be disposed so that it covers substantially the whole power module 114 from above and protrudes to the right side from the power module 114 in the plan view. Particularly, the length of the control circuit board 116 in the longitudinal direction (left-and-right direction) is set longer than the length of each side of the upper surface (and the bottom surface) of the power module 114. The control circuit board 116 may be disposed in the front-and-rear direction so that a front edge of the control circuit board 116 is located at substantially the same position as a front edge of the power module 114, and a rear edge of the control circuit board 116 is located at substantially the same position as a rear edge of the power module 114. Further, the control circuit board 116 is disposed in the left-and-right direction so that a left edge of the control circuit board 116 is located at substantially the same position as a left edge of the power module 114, and a right edge of the control circuit board 116 is located on the right side of a right edge of the power module 114.

The control circuit board 116 may be disposed so that it extends entirely in the left-and-right direction inside the center accommodating part 104C. Thus, inside a right end part of the center accommodating part 104C, a right end part of the control circuit board 116 is located, and the right end part of the control circuit board 116 overlaps with the specific apparatus 70 in the plan view, similarly to the right end part of the center accommodating part 104C described above.

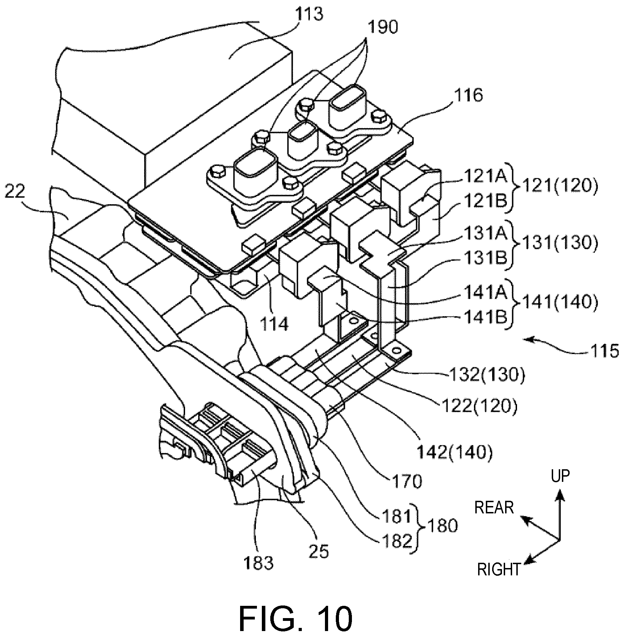

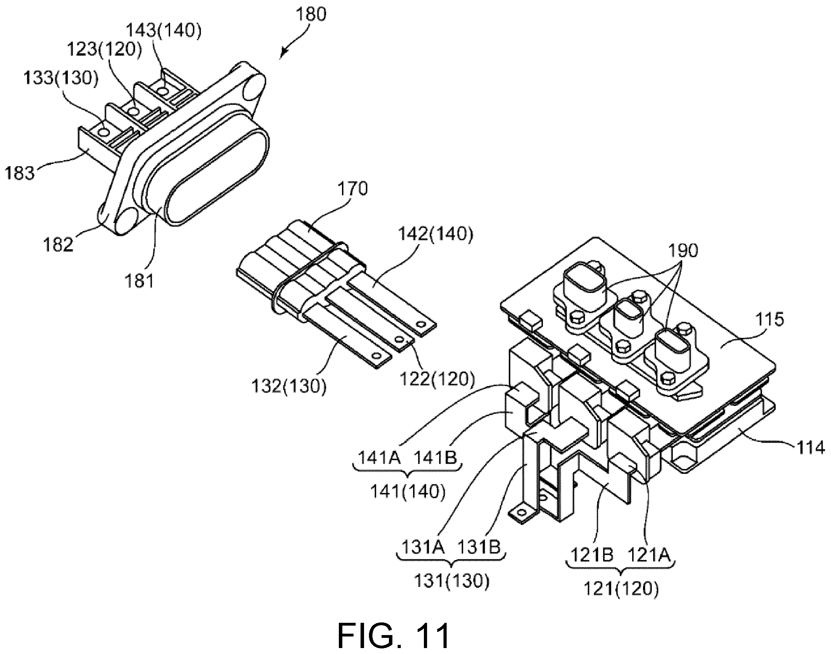

Fig. 10 is an outline perspective view illustrating a peripheral structure of the AC busbar 115 and the busbar insert part 25. Fig. 11 is an outline perspective view illustrating the AC busbar 115 disassembled.

The AC busbar 115 is comprised of one or more busbars, particularly three busbars. Particularly, the U-phase AC busbar 120, the V-phase AC busbar 130, and the W-phase AC busbar 140 have first busbars 121, 131, and 141 connected to the power module 114, second busbars 122, 132, and 142 connected to the first busbars 121, 131, and 141, and third busbars 123, 133, and 143 connected to the second busbars 122, 132, and 142, respectively.

The first busbars 121, 131, and 141 have first parts 121A, 131A, and 141A connected to the power module 114 and extending forward, and second parts 121B, 131B, and 141B extending downwardly from front ends of the first parts 121A, 131A, and 141A, respectively. In the first busbars 121, 131, and 141, the first parts 121A, 131A, and 141A and the second parts 121B, 131B, and 141B may be formed integrally. For example, in the first busbars 121, 131, and 141, the first parts 121A, 131A, and 141A and the second parts 121B, 131B, and 141B are formed by bending plate-shaped metal members.

The first parts 121A, 131A, and 141A have a plate shape, and extend forward from the power module 114 in a posture extending substantially horizontally. As described above, the parts corresponding to the U-phase, the V-phase, and the W-phase of the power module 114 may be lined up in the left-and-right direction. Corresponding to this, the first parts 121A, 131A, and 141A of the first busbars 121, 131, and 141 extend in the left-and-right direction and are parallel to each other.

In this embodiment, the part corresponding to the U-phase of the power module 114 and the first part 121A of the U-phase connected to this part, the part corresponding to the V-phase of the power module 114 and the first part 131A of the V-phase connected to this part, and the part corresponding to the W-phase of the power module 114 and the first part 141A of the W-phase connected to this part are lined up in this order from the left side.

The second busbars 122, 132, and 142 have a plate shape. The second busbars 122, 132, and 142 may be disposed in the up-and-down direction at a position separated downwardly from the power module 114 in a posture extending in the left-and-right direction and substantially horizontally. The second busbars 122, 132, and 142 may be lined up in the front-and-rear direction. The most rearward second busbar is disposed in the front-and-rear direction so that its front edge is located rearward of a front edge of the first part of the corresponding first busbar. In this embodiment, the second busbars 122, 132, and 142 are lined up in order of the W-phase, the U-phase, and the V-phase from the rear side, and, a front edge of the second busbar 142 of the W-phase AC busbar 140 is located rearward of a front edge of the first part 141A of the W-phase AC busbar 140.

The second busbars 122, 132, and 142 may be held by a busbar coupling member 170 in a posture in which they are parallel to each other. The busbar coupling member 170 is an insulation member extending in the front-and-rear direction and the left-and-right direction. Right parts of the second busbars 122, 132, and 142 are inserted into the busbar coupling member 170, and, thereby, the three second busbars 122, 132, and 142 are held by the busbar coupling member 170.

The second parts 121B, 131B, and 141B of the first busbars 121, 131, and 141 extend in the up-and-down direction between front ends of the corresponding first parts 121A, 131A, and 141A and left end parts of the corresponding second busbars 122, 132, and 142. Here, as described above, the front edge of the second busbar 142 of the W-phase AC busbar 140 may be located rearward of the front edge of the first part 141A of the W-phase AC busbar 140. Thus, the second part 141B of the W-phase AC busbar 140 is bent rearwardly at an intermediate location in the up-and-down direction.

Lower end parts of the second parts 121B, 131B, and 141B, and left end parts of the second busbars 122, 132, and 142 may be coupled to each other with bolts and nuts. Note that in Fig. 10, illustration of the bolts and the nuts which couple these end parts is omitted.

The third busbars 123, 133, and 143 have a plate shape, and extends rightwardly from right ends of the second busbars 122, 132, and 142 in a posture extending substantially horizontally. The third busbars 123, 133, and 143 may be lined up in order of the W-phase, the U-phase, and the V-phase from the rear side corresponding to the second busbars 122, 132, and 142.

In this embodiment, the third busbars 123, 133, and 143 may be held by a motor side connector 180 in a posture in which the busbars are parallel to each other. The motor side connector 180 may include a surrounding part 181 which has a substantially cylindrical shape extending in the left-and-right direction and surrounds the busbar coupling member 170, a flange part 182 which is fixed to the right end of the surrounding part 181 and extends radially outward from an outer circumferential surface of the surrounding part 181, and a busbar holding part 183 which is fixed to the inside of the surrounding part 181 and extends in the left-and-right direction. Three spaces lined up in the front-and-rear direction are defined in the busbar holding part 183, and the third busbars 123, 133, and 143 may be fixed to the inside of the respective spaces. In this embodiment, by inserting the busbar coupling member 170 into the surrounding part 181, the third busbars 123, 133, and 143 and the corresponding second busbars 122, 132, and 142 are electrically connected to each other inside of the surrounding part 181 and the busbar coupling member 170, respectively.

The first parts 121A, 131A, and 141A of the first busbars 121, 131, and 141 may be disposed inside the first accommodating part 104. On the other hand, the second busbars 122, 132, and 142 may be disposed inside the second accommodating part 105, and the second parts 121B, 131B, and 141B of the first busbars 121, 131, and 141 which couple the first busbars 121, 131, and 141 to the second busbars 122, 132, and 142 extend in the up-and-down direction between the first accommodating part 104 and the second accommodating part 105, respectively. That is, upper parts of the second parts 121B, 131B, and 141B are disposed inside the first accommodating part 104, and their lower parts are disposed inside the second accommodating part 105.

The third busbars 123, 133, and 143 may be supported by the case 101 in a state where they protrude outwardly from the case 101.

Particularly, a part which is a lower part of the front end part of the right side surface of the case 101 and constitutes a lower part of the right side surface of the second accommodating part 105 is provided with a busbar holding part 106 which protrudes rightwardly. A through-hole 106A which communicates with an inside space of the second accommodating part 105 (the second space C2) and extends in the left-and-right direction may be formed in the busbar holding part 106.

The motor side connector 180 may be held by the case 101 in a state where the flange part 182 is located on the right side of the busbar holding part 106 and the surrounding part 181 is inserted into the through-hole 106A of the busbar holding part 106. Thus, right end parts of third busbars 123, 133, and 143 (i.e., end parts of the AC busbar 115 on the motor M side) protrude rightwardly from the lower part of the front end part of the right side surface of the case 101.

The right end parts of the third busbars 123, 133, and 143 (i.e., the end parts of the AC busbar 115 on the motor M side) may be inserted into the busbar insert part 25 and are electrically connected with the motor M inside of the busbar insert part 25. Particularly, the three busbars electrically connected with the coils of the respective phases of the motor M are disposed inside the busbar insert part 25.

By fastening the busbars corresponding to the phases on the motor M side to the end parts of the busbars corresponding to the phases of the AC busbar 115 inside the busbar insert part 25, the AC busbar 115 (as well as the power converter 100) and the motor M are electrically connected with each other. Here, as described above, the opening 25A of the busbar insert part 25 opens to the left in the left side surface of the busbar insert part 25. Thus, the end part of the AC busbar 115 on the motor M side is inserted into the busbar insert part 25 from the left.

Here, as described above, the busbar holding part 106 protrudes to the right side from the right side surface of the case 101. Note that as illustrated in Fig. 3, the right end of the busbar holding part 106 is located on the left side of the right end of the center accommodating part 104C. In other words, the center accommodating part 104C has a shape which bulges to the right side of the busbar holding part 106 in the left-and-right direction.

### (Operation)

As described above, in the above embodiment, the smoothing capacitor 113, and the power module 114 are lined up in the front-and-rear direction. Therefore, the dimensions of the spaces in the up-and-down direction and the left-and-right direction occupied by these components (the dimensions of the part (the first accommodating part 104) in the up-and-down direction and the left-and-right direction which accommodates these components) can be reduced.

Particularly, since in the above embodiment the smoothing capacitor 113 and the power module 114, as well as the DC busbar 111 and the filter 112 are lined up in the front-and-rear direction, the dimensions of the space occupied by these four components and the part (first accommodating part 104) which accommodates these components in the up-and-down direction and the left-and-right direction can be reduced. Further, the DC busbar 111, the filter 112, the smoothing capacitor 113, and the power module 114 are lined up in this order. That is, the order of transferring the electric power is the same as the lined-up order of these components. Therefore, the distance between the components which give and receive the electric power can be reduced, and the inductance and the impedance can be reduced. In detail, the first coupling busbar 105A which couples the DC busbar 111 to the filter 112, the second coupling busbar 105B which couples the filter 112 to the smoothing capacitor 113, and the third coupling busbar 105C which couples the smoothing capacitor 113 to the power module 114 can be reduced in the lengths in the front-and-rear direction, thereby reducing the inductance and the impedance.

The connector 190 for communication is provided to an upper surface of the case 101. Therefore, it can be suppressed that a colliding object collides with the connector 190 for communication in the front-and-rear direction or the left-and-right direction in a front collision, a rear collision, or a side collision of the vehicle, thereby preventing a disruption of the communication between the power converter 100 and the PCM 400.

Further, the control circuit board 116 and the power module 114 are disposed below the connector 190 for communication in a state where they overlap with the connector 190 for communication in the plan view. Therefore, a member which couples the connector 190 for communication to the control circuit board 116, and a member which couples the control circuit board 116 to the power module 114 can be shortened.

Further, a part of the center accommodating part 104C of the case 101 is disposed in a gap between the specific apparatus 70 provided so as to protrude to the left side from the left side surface 1A of the engine body 1, and the motor housing 22 and the axle housing 23. Therefore, the specific apparatus 70 and the center accommodating part 104C (i.e., the case 101, as well as the power converter 100) can be disposed compactly above the housings 22 and 23, thereby increasing the degree of freedom in the layout around the housing 22 and 23.

Particularly, in the above embodiment, the control circuit board 116 which is longer than the power module 114 is used, the control circuit board 116 is accommodated in the center accommodating part 104C in the state of extending to the right side of the power module in the plan view, and the gap described above is used as the installation space of the control circuit board 116. Therefore, the space around the engine body 1 can be used efficiently, by bringing the position of the case 101 closer to the engine body 1, while using the elongated substrate serving as the control circuit board 116.

Further, since the connector 190 for communication is disposed at the position where it does not overlap with the specific apparatus 70 in the plan view, the access to the connector 190 for communication from above becomes easier. Therefore, when assembling the power converter 100, the harnesses extending from the PCM 400 can be easily connected to the connector 190 for communication, thereby improving the assembling efficiency.

Further, the AC busbar 115 is inserted into the busbar insert part 25 provided to the housing 20 from the left (that is, it is inserted in the left-and-right direction). In other words, when assembling the powertrain module PT, by moving the power converter 100 in the left-and-right direction, the AC busbar 115 can be inserted into the busbar insert part 25 to couple the power converter 100 to the housing 20 (as well as the motor M). Thus, the work space to be secured around the power converter 100 in order to insert the AC busbar 115 into the busbar insert part 25 to couple the power converter 100 to the motor M can be reduced in the up-and-down direction. Therefore, the gap size between the power converter 100 and the specific apparatus 70 in the up-and-down direction can be reduced, and the volume of the power converter 100 and the specific apparatus 70 can be secured.

### (Modifications)

Although in the above embodiment the housing 20 is disposed on the left side of the engine body 1, the housing 20 may be disposed on the right side of the engine body 1. Further, the housing 20 and the engine body 1 may be lined up in the front-and-rear direction. Note that, if the housing 20 and the engine body 1 are lined up in the front-and-rear direction (in the front-and-rear direction of the vehicle), the front-and-rear direction is an example of the "first direction" of the present invention, and the left-and-right direction (the vehicle width direction) is an example of the "second direction" of the present invention.

Although in the above embodiment the specific apparatus 70 provided so as to protrude to the left side from the left side surface 1A of the engine body 1 includes the EGR cooler 7A, the EGR cooler connecting part 7B, the EGR valve unit 7C, and the fuel pump 8, the specific apparatus is not limited to these apparatuses.

Although in the above embodiment the low-voltage battery 300 is disposed above the power converter 100, an air filter may be disposed instead of the low-voltage battery 300.

Although in the above embodiment the device which is electrically connected with the connector 190 for communication and communicates with the power converter 100 is the PCM 400, this communication device is not limited to the PCM 400.

It should be understood that the embodiments herein are illustrative and not restrictive, since the scope of the invention is defined by the appended claims rather than by the description preceding them.

### DESCRIPTION OF REFERENCE CHARACTERS

- 1: Engine Body
- 7A: EGR Cooler (Protrusion)
- 7B: EGR Cooler Connecting Part (Protrusion)
- 7C: EGR Valve Unit (Protrusion)
- 8: Fuel Pump (Protrusion)
- 20: Housing
- 21: Front Cover
- 22: Motor Housing
- 23: Axle Housing
- 70: Specific Apparatus (Protrusion)
- 100: Power Converter
- 101: Case
- 104A: Front Accommodating Part
- 104C: Center Accommodating Part (Bulged Part)
- 104B: Rear Accommodating Part
- 106: Busbar Holding Part
- 113: Smoothing Capacitor
- 114: Power Module
- 116: Control Circuit Board
- 115: AC Busbar
- 400: PCM (Communication Device)
- M: Motor
- E: Engine

## Claims

1. A powertrain structure of a vehicle (V), comprising:
an engine (E) serving as a driving source configured to propel the vehicle (V), the engine (E) including an engine body (1) where a combustion chamber (C) is formed;
a motor (M) serving as a driving source configured to propel the vehicle (V);
a battery (200) configured to supply electric power to the motor (M);
a power converter (100) configured to convert direct current of the battery (200) into alternating current and supply the alternating current to the motor (M);
a housing (20) disposed on one side of the engine body (1) in a horizontal first direction and configured to accommodate the motor (M) therein; and
a communication device (400) configured to communicate with the power converter (100), the power converter (100) including:
a smoothing capacitor (113) configured to smooth the direct current inputted from the battery (200);
a power module (114) disposed on one side of the smoothing capacitor (113) in a horizontal second direction perpendicular to the first direction, and configured to convert the direct current smoothed by the smoothing capacitor (113) into alternating current; and
a connector (190) for communication provided to an upper surface of the power converter (100) and electrically connected with the communication device (400),
wherein a protrusion (7A, 7B, 7C, 8, 70) is disposed above the housing (20), the protrusion (7A, 7B, 7C, 8, 70) protruding from a side surface of the engine body (1) on the one side in the first direction to the one side,
wherein the power converter (100) is partially located between the housing (20) and the protrusion (7A, 7B, 7C, 8, 70), and is disposed above the housing (20) in a state where the connector for communication (190) does not overlap with the protrusion (7A, 7B, 7C, 8, 70) in a plan view,
wherein the power converter (100) includes an AC busbar (115) coupled to the motor (M) and configured to transmit the alternating current generated by the power module (114) to the motor (M), and
wherein the housing (20) is provided with a busbar insert part (25) into which the AC busbar (115) is inserted in the first direction.

2. The powertrain structure of claim 1,
wherein the communication device (400) is configured to transmit a signal for controlling the power module (114), and
wherein the power module (114) is disposed below the connector for communication (190).

3. The powertrain structure of claim 1 or 2,
wherein the power converter (100) has a case (101) configured to accommodate the smoothing capacitor (113) and the power module (114), the case (101) having an upper surface on which the connector (190) for communication is provided, and
wherein the case (101) includes a busbar holding part (106) provided to an end thereof in the second direction and configured to hold the AC busbar (115), and a bulged part (104C) bulging toward the other side of the busbar holding part (106) in the first direction.

4. The powertrain structure of claim 3, further comprising a support member (29) via which the case (101) is supported by the housing (20).

5. The powertrain structure of any one of the preceding claims,
wherein the AC busbar (115) is configured to extend downwardly and to extend in the first direction toward the busbar insert part (25).

6. The powertrain structure of any one of the preceding claims,
wherein the power converter (100) includes a control circuit board (116) electrically connected with the connector (190) for communication and the power module (114), and configured to control the power module (114), and
wherein the control circuit board (116) is disposed above the power module (114) in a state where the control circuit board (116) extends to the other side from the power module (114) in the first direction in the plan view.

7. The powertrain structure of any one of the preceding claims,
wherein the protrusion (7A, 7B, 7C, 8, 70) is an EGR cooler (7A), an EGR cooler connecting part (7B), an EGR valve unit (7C) and/or a fuel pump (8).

8. The powertrain structure of any one of the preceding claims, further comprising another battery (300) disposed above the power converter (100).

9. The powertrain structure of any one of the preceding claims,
wherein housing (20) includes a motor housing (22) in which the motor (M) is disposed, and an axle housing (23) in which a transmission (TM) is disposed.

10. The powertrain structure of any one of the preceding claims,
wherein the first direction is a width direction of the vehicle (V), and
wherein the second direction is a front-and-rear direction of the vehicle (V).

11. A vehicle (V) comprising the powertrain structure of any one of the preceding claims.

## Patentansprüche

1. Eine Antriebsstrangstruktur eines Fahrzeugs (V), umfassend:
einen Verbrennungsmotor (E), der als Antriebsquelle dient, die dazu konfiguriert ist, das Fahrzeug (V) anzutreiben, wobei der Verbrennungsmotor (E) einen Motorkörper (1) beinhaltet, in dem eine Brennkammer (C) ausgebildet ist;
einen Elektromotor (M), der als Antriebsquelle dient, die dazu konfiguriert ist, das Fahrzeug (V) anzutreiben;
eine Batterie (200), die dazu konfiguriert ist, den Elektromotor (M) mit elektrischer Energie zu versorgen;
einen Stromrichter (100), der dazu konfiguriert ist, einen Gleichstrom der Batterie (200) in Wechselstrom umzuwandeln und den Wechselstrom dem Elektromotor (M) zuzuführen;
ein Gehäuse (20), das auf einer Seite des Motorkörpers (1) in einer horizontalen ersten Richtung angeordnet ist und dazu konfiguriert ist, den Elektromotor (M) darin aufzunehmen; und
eine Kommunikationsvorrichtung (400), die dazu konfiguriert ist, mit dem Stromrichter (100) zu kommunizieren, wobei der Stromrichter (100) Folgendes beinhaltet:
einen Glättungskondensator (113), der dazu konfiguriert ist, den von der Batterie (200) eingespeisten Gleichstrom zu glätten;
ein Leistungsmodul (114), das auf einer Seite des Glättungskondensators (113) in einer horizontalen zweiten Richtung senkrecht zur ersten Richtung angeordnet ist und dazu konfiguriert ist, den durch den Glättungskondensator (113) geglätteten Gleichstrom in Wechselstrom umzuwandeln; sowie
einen Kommunikationssteckverbinder (190), der an einer oberen Fläche des Stromrichters (100) vorgesehen ist und elektrisch mit der Kommunikationsvorrichtung (400) verbunden ist,
wobei ein Vorsprung (7A, 7B, 7C, 8, 70) oberhalb des Gehäuses (20) angeordnet ist, wobei der Vorsprung (7A, 7B, 7C, 8, 70) von einer Seitenfläche des Motorkörpers (1) auf der einen Seite in der ersten Richtung zu der einen Seite hin vorsteht,
wobei der Stromrichter (100) teilweise zwischen dem Gehäuse (20) und dem Vorsprung (7A, 7B, 7C, 8, 70) angeordnet ist und sich über dem Gehäuse (20) in einem Zustand befindet, in dem sich der Kommunikationssteckverbinder (190) in einer Draufsicht nicht mit dem Vorsprung (7A, 7B, 7C, 8, 70) überlappt,
wobei der Stromrichter (100) eine Wechselstrom-Sammelschiene beinhaltet (115) umfasst, die mit dem Elektromotor (M) gekoppelt und dazu konfiguriert ist, den vom Leistungsmodul (114) erzeugten Wechselstrom an den Elektromotor (M) zu übertragen, und
wobei das Gehäuse (20) mit einem Sammelschieneneinführteil (25) versehen ist, in das die Wechselstrom-Sammelschiene (115) in der ersten Richtung eingeführt ist.

2. Die Antriebsstrangstruktur nach Anspruch 1,
wobei die Kommunikationsvorrichtung (400) dazu konfiguriert ist, ein Signal zur Steuerung des Leistungsmoduls (114) zu übermitteln, und
wobei das Leistungsmodul (114) unterhalb des Kommunikationssteckverbinders (190) angeordnet ist.

3. Die Antriebsstrangstruktur nach Anspruch 1 oder 2,
wobei der Stromrichter (100) ein Gehäuse (101) aufweist, das dazu konfiguriert ist, den Glättungskondensator (113) und das Leistungsmodul (114) aufzunehmen, wobei das Gehäuse (101) eine obere Fläche aufweist, an der der Kommunikationssteckverbinder (190) vorgesehen ist, und
wobei das Gehäuse (101) Folgendes beinhaltet: ein Sammelschienen-Halteteil (106), das an einem Ende davon in der zweiten Richtung vorgesehen und zum Halten der Wechselstrom-Sammelschiene (115) konfiguriert ist, sowie ein Ausbuchtungsteil (104C), das in der ersten Richtung zur anderen Seite des Sammelschienen-Halteteils (106) hin ausgebuchtet ist.

4. Die Antriebsstrangstruktur nach Anspruch 3, ferner umfassend ein Stützelement (29), über das das Gehäuse (101) durch das Gehäuse (20) abgestützt wird.

5. Die Antriebsstrangstruktur nach irgendeinem der vorstehenden Ansprüche,
wobei die Wechselstrom-Sammelschiene (115) dazu konfiguriert ist, sich nach unten zu erstrecken und sich in der ersten Richtung zum Sammelschieneneinführteil (25) hin zu erstrecken.

6. Die Antriebsstrangstruktur nach irgendeinem der vorstehenden Ansprüche,
wobei der Stromrichter (100) eine Steuerplatine (116) beinhaltet, die elektrisch mit dem Kommunikationssteckverbinder (190) und dem Leistungsmodul (114) verbunden und dazu konfiguriert ist, das Leistungsmodul (114) zu steuern, und
wobei die Steuerplatine (116) oberhalb des Leistungsmoduls (114) in einem Zustand angeordnet ist, in dem sich die Steuerplatine (116) in der Draufsicht in der ersten Richtung vom Leistungsmodul (114) aus zur anderen Seite erstreckt.

7. Die Antriebsstrangstruktur nach irgendeinem der vorstehenden Ansprüche,
wobei der Vorsprung (7A, 7B, 7C, 8, 70) ein EGR-Kühler (7A), ein EGR-Kühler-Verbindungsteil (7B), eine EGR-Ventileinheit (7C) und/oder eine Kraftstoffpumpe (8) ist.

8. Die Antriebsstrangstruktur nach irgendeinem der vorstehenden Ansprüche, ferner umfassend eine weitere Batterie (300), die oberhalb des Stromrichters (100) angeordnet ist.

9. Die Antriebsstrangstruktur nach irgendeinem der vorstehenden Ansprüche,
wobei das Gehäuse (20) ein Motorgehäuse (22), in dem der Elektromotor (M) angeordnet ist, und ein Achsgehäuse (23) beinhaltet, in dem ein Getriebe (TM) angeordnet ist.

10. Die Antriebsstrangstruktur nach irgendeinem der vorstehenden Ansprüche,
wobei die erste Richtung eine Breitenrichtung des Fahrzeugs (V) ist und
wobei die zweite Richtung eine Richtung von vorne nach hinten des Fahrzeugs (V) ist.

11. Ein Fahrzeug (V), umfassend die Antriebsstrangstruktur nach irgendeinem der vorstehenden Ansprüche.

## Revendications

1. Une structure de groupe motopropulseur d'un véhicule (V), comprenant :
un moteur à combustion interne (E) servant de source d'entraînement configurée pour propulser le véhicule (V), le moteur à combustion interne (E) incluant un corps de moteur (1) dans lequel est formée une chambre de combustion (C) ;
un moteur électrique (M) servant de source d'entraînement configurée pour propulser le véhicule (V) ;
une batterie (200) configurée pour fournir de l'énergie électrique au moteur électrique (M) ;
un convertisseur de puissance (100) configuré pour convertir le courant continu de la batterie (200) en courant alternatif et fournir le courant alternatif au moteur électrique (M) ;
un boîtier (20) disposé sur un côté du corps de moteur (1) dans une première direction horizontale et configuré pour loger le moteur électrique (M) à l'intérieur de celui-ci ; et
un dispositif de communication (400) configuré pour communiquer avec le convertisseur de puissance (100), le convertisseur de puissance (100) incluant :
un condensateur de lissage (113) configuré pour lisser le courant continu fourni depuis la batterie (200) ;
un module de puissance (114) disposé d'un côté du condensateur de lissage (113) dans une deuxième direction horizontale perpendiculaire à la première direction, et configuré pour convertir le courant continu lissé par le condensateur de lissage (113) en courant alternatif ; et
un connecteur de communication (190) prévu sur une surface supérieure du convertisseur de puissance (100) et connecté électriquement au dispositif de communication (400),
sachant qu'une saillie (7A, 7B, 7C, 8, 70) est disposée au-dessus du boîtier (20), la saillie (7A, 7B, 7C, 8, 70) faisant saillie depuis une surface latérale du corps de moteur (1) sur ledit un côté dans la première direction vers ledit un côté,
sachant que le convertisseur de puissance (100) est partiellement situé entre le boîtier (20) et la saillie (7A, 7B, 7C, 8, 70), et est disposé au-dessus du boîtier (20) dans un état dans lequel le connecteur de communication (190) ne chevauche pas la saillie (7A, 7B, 7C, 8, 70) en vue en plan,
sachant que le convertisseur de puissance (100) inclut une barre omnibus CA (115) couplée au moteur électrique (M) et configurée pour transmettre le courant alternatif généré par le module de puissance (114) au moteur électrique (M), et
sachant que le boîtier (20) est muni d'une pièce d'insertion de barre omnibus (25) dans laquelle la barre omnibus CA (115) est insérée dans la première direction.

2. La structure de groupe motopropulseur d'après la revendication 1,
sachant que le dispositif de communication (400) est configuré pour transmettre un signal destiné à commander le module de puissance (114), et
sachant que le module de puissance (114) est disposé au-dessous du connecteur de communication (190).

3. La structure de groupe motopropulseur d'après la revendication 1 ou 2,
sachant que le convertisseur de puissance (100) présente un boîtier (101) configuré pour loger le condensateur de lissage (113) et le module de puissance (114), le boîtier (101) présentant une surface supérieure sur laquelle est fourni le connecteur de communication (190), et
sachant que le boîtier (101) inclut une pièce de maintien de barre omnibus (106) fournie à une extrémité de celui-ci dans la deuxième direction et configurée pour maintenir la barre omnibus CA (115), ainsi qu'une pièce bombée (104C) se renflant vers l'autre côté de la pièce de maintien de barre omnibus (106) dans la première direction.

4. La structure de groupe motopropulseur d'après la revendication 3, comprenant en outre un élément de support (29) par l'intermédiaire duquel le boîtier (101) est soutenu par le boîtier (20).

5. La structure de groupe motopropulseur d'après l'une quelconque des revendications précédentes,
sachant que la barre omnibus CA (115) est configurée pour s'étendre vers le bas et pour s'étendre dans la première direction vers la pièce d'insertion de barre omnibus (25).

6. La structure de groupe motopropulseur d'après l'une quelconque des revendications précédentes,
sachant que le convertisseur de puissance (100) inclut une carte de circuit imprimé de commande (116) reliée électriquement au connecteur de communication (190) et au module de puissance (114), et configurée pour commander le module de puissance (114), et
sachant que la carte de circuit imprimé de commande (116) est disposée au-dessus du module de puissance (114) dans un état dans lequel, vue en plan, le circuit imprimé de commande (116) s'étend de l'autre côté depuis le module de puissance (114) dans la première direction.

7. La structure de groupe motopropulseur d'après l'une quelconque des revendications précédentes,
sachant que la saillie (7A, 7B, 7C, 8, 70) est un refroidisseur RGE (7A), une pièce de raccordement du refroidisseur RGE (7B), une unité de vanne RGE (7C) et/ou une pompe à carburant (8).

8. La structure de groupe motopropulseur d'après l'une quelconque des revendications précédentes, comprenant en outre une autre batterie (300) disposée au-dessus du convertisseur de puissance (100).

9. La structure de groupe motopropulseur d'après l'une quelconque des revendications précédentes,
sachant que le boîtier (20) inclut un carter de moteur (22) dans lequel est disposé le moteur électrique (M), et un carter d'essieu (23) dans lequel est disposée une transmission (TM).

10. La structure de groupe motopropulseur d'après l'une quelconque des revendications précédentes,
sachant que la première direction est une direction de largeur du véhicule (V), et
sachant que la deuxième direction est une direction avant-arrière du véhicule (V).

11. Un véhicule (V) comprenant la structure de groupe motopropulseur d'après l'une quelconque des revendications précédentes.
